(19) Europäisches Patentamt
European Patent Office
Office européen des brevets

(11) **EP 2 500 858 A1**

(12) **EUROPEAN PATENT APPLICATION**
published in accordance with Art. 153(4) EPC

(43) Date of publication:
**19.09.2012 Bulletin 2012/38**

(51) Int Cl.:
***G06Q 50/00*** *(2012.01)*     ***E04G 1/00*** *(2006.01)*

(21) Application number: **09851240.3**

(86) International application number:
**PCT/JP2009/006054**

(22) Date of filing: **12.11.2009**

(87) International publication number:
**WO 2011/058606 (19.05.2011 Gazette 2011/20)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Kabushiki Kaisha Toshiba
Minato-ku
Tokyo 105-8001 (JP)**

(72) Inventors:
• **UMEKI, Toyohiro
Tokyo 105-8001 (JP)**

• **HATAKEYAMA, Makoto
Tokyo 105-8001 (JP)**
• **SORI, Shinji
Tokyo 105-8001 (JP)**

(74) Representative: **HOFFMANN EITLE
Patent- und Rechtsanwälte
Arabellastrasse 4
81925 München (DE)**

(54) **CONSTRUCTION PROCESS CREATION SYSTEM AND CONSTRUCTION PROCESS CREATION METHOD**

(57)     There are provided a construction process creation system and a construction process creation method each facilitating decision of a construction process. The construction process creation system includes: a storage unit to store construction object data having construction object identifiers identifying a plurality of construction objects from one another, type information, position information, size information, and weight information; an allocation unit to allocate the plurality of construction objects to any one of a plurality of construction works based on the type information; and a calculation unit to calculate a construction period of each of the plurality of construction works based on a size or a weight of the construction object allocated to each of the plurality of construction works.

FIG. 1

**Description**

Technical Field

The present invention relates to a construction process creation system and a construction process creation method.

Background Art

To make facilities such as plant (for example, a power station) and the like available as planned, it is important to precisely create a construction process of the facilities. Hence a building program apparatus enabling time-series confirmation of the construction state is disclosed (see Reference 1). Facility state data corresponding to a building process is created and can be displayed in three dimensions by an image display device or the like.

Prior Art Document

Patent Document

Reference 1: JP-A 2002-266498 (KOKAI)

Summary of the Invention

Problems to Be Solved by the Invention

However, it is not always easy to adequately decide the construction process of facilities including many construction objects.
An object of the present invention is to provide a construction process creation system and a construction process creation method each facilitating decision of a construction process.

Means for Solving the Problems

A construction process creation system according to an aspect of the present invention includes: a storage unit to store construction object data having construction object identifiers identifying a plurality of construction objects from one another, type information, position information, size information, and weight information; an allocation unit to allocate the plurality of construction objects to any one of a plurality of construction works based on the type information; and a calculation unit to calculate a construction period of each of the plurality of construction works based on a size or a weight of the construction object allocated to each of the plurality of construction works.
A construction process creation method according to an aspect of the present invention includes: allocating a construction object to any one of a plurality of construction works based on type information in construction object data having a construction object identifier identifying the construction object, the type information, position information, size information, and weight information; and calculating a construction period of each of the plurality of construction works based on a size or a weight of the construction object allocated to each of the plurality of construction works.
A construction process creation system according to an aspect of the present invention includes: a first storage unit to store construction object data including position information on a plurality of construction objects; a second storage unit to store display control information representing presence or absence of display at each of start time and end time of construction of each of the plurality of construction objects; and a display unit to display the plurality of construction objects based on the display control information and on the position information.

Effect of the Invention

According to the present invention, a construction process creation system and a construction process creation method each facilitating decision of a construction process can be provided.

Brief Description of Drawings

[Fig. 1] Fig. 1 is a block diagram illustrating an example of a construction process creation system 10 according to an embodiment of the present invention.

[Fig. 2] Fig. 2 is a schematic chart illustrating an example of construction object data.

[Fig. 3] Fig. 3 is a schematic diagram illustrating an example of a construction process chart.

[Fig. 4] Fig. 4 is a flowchart illustrating an example the operation procedure of the construction process creation system 10.

[Fig. 5] Fig. 5 is a schematic chart illustrating an example of a space (i, j, k) sectioned by unit volume.

[Fig. 6] Fig. 6 is a schematic chart illustrating an example of display of a pipeline density p.

[Fig. 7A] Fig. 7A is a schematic view illustrating an example of a time-series display of a construction state.

[Fig. 7B] Fig. 7B is a schematic view illustrating the example of the time-series display of the construction state.

[Fig. 7C] Fig. 7C is a schematic view illustrating the example of the time-series display of the construction state.

Embodiments for Carrying out the Invention

Hereinafter, embodiments of the present invention will be described in detail referring to the drawings.

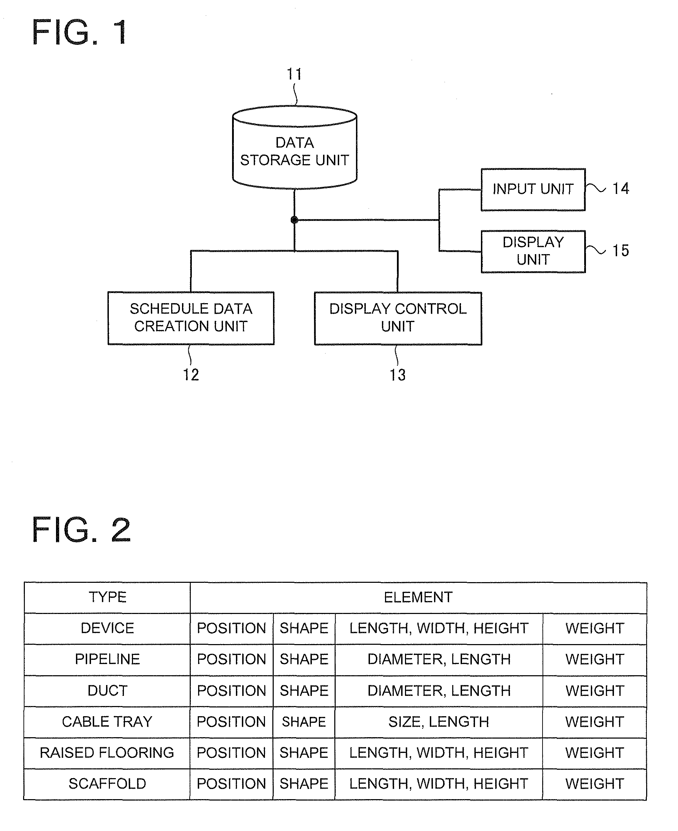

Fig. 1 is a block diagram illustrating an example of a construction process creation system 10 according to an embodiment of the present invention. The construction process creation system 10 can be used for creating the process of construction of a plant or the like. The construction process creation system 10 has a data storage unit 11, a schedule data creation unit 12, a display control unit 13, an input unit 14, and a display unit 15. Note that the construction process creation system 10 can be composed of either only hardware or a combination of hardware (CPU (Central Processing Unit)) and software (program).

The data storage unit 11 is a storage device storing data, for example, a hard disk. The data storage unit 11 stores building data, construction object data, schedule data, construction basic data, and construction condition data.

The data storage unit 11 functions as "a storage unit to store construction object data including construction object identifiers identifying a plurality of construction objects from one another, type information, position information, size information, and weight information" and "a second storage unit to store movement amount information representing the movement amount of a construction object."

(1) Building data (construction section data)

The building data is data on a building in which a construction object such as a device is placed. The building data includes 3D (three-dimensional) data (section data) representing each of ranges of sections into which the building is sectioned. The section is an individual room which is partitioned, for example, by walls or the like. Incidentally, sections may be set even for one room for convenience of construction. As will be describe later, the arrangement and the physical quantity of the construction object in each section can be calculated by comparing the section data and the construction object data.

(2) Construction object data

The construction object data is, for example, 3D (three dimensional) CAD (Computer Aided Design) data representing a construction object for constructing a plant (for example, a power station). Fig. 2 is a schematic chart illustrating an example of the construction object data.

As the types of the construction object, device, pipeline, duct, cable tray, raised flooring, scaffold are listed here. "Device" is an apparatus such as pump, tank, motor, or the like. "Pipelin" is a passage which connects devices and through which liquid or gas flows (for example, pipe). "Duct" is a passage of air for ventilating (supplying air to, exhausting air from) the building. "Cable tray" is a passage of cables for power, control, and measurement. "Raised flooring" is a pedestal which an operator operating a device and the like mounts. "Scaffold" is a pedestal which is temporarily placed during the construction and workers for construction mount.

In addition to the above, the types of construction object include various types of meter, instrumentation rack and the like. For easy understanding, the listed types of the construction object are limited here.

As elements of the construction object data, position, shape, size (length, width, height and the like), and weight are indicated. As "position", a representative point (for example, the center) of each construction object is expressed by coordinates on the three dimensions. "Shape" means the shape (for example, rectangular parallelepiped, columnar shape) of each construction object. The shape of the pipeline is expressed by a cylindrical shape, an L-shape (a combination of two cylindrical shapes) according to a straight pipe or an L-pipe. "Size" indicates the spatial spread of each construction object. "Weight" indicates the mass of each construction object.

Among the elements of the construction object data, the size and weight are used as the physical quantities for calculation of a later-described construction period T1. Further, the position, shape, size are used for the 3D display and the 2D display of each construction object.

Here, the position (position information) typically indicates the position where the construction object is finally placed. If the movement amount (movement amount information) is contained in the elements of the schedule data as will be described later, it is possible to indicate the state that the construction object is placed at a position different from the finally placed position of the construction object. When the construction object is temporarily placed (when temporarily placed at a position different from the final placement position), the placement of the construction object can be indicated.

The construction object is sectioned into a minimum unit (a construction minimum unit, for example, one pipe) integrally handled in the construction. For the pipeline, duct, cable tray, a plurality of pipes or the like are connected and united by the construction. Therefore, the element of the position or the like is indicated for each construction minimum unit for the construction object. To identify each of a plurality of construction objects, a construction object identifier is given in each construction minimum unit In other words, the construction object data includes the construction object identifier identifying each construction object.

(3) Schedule data

The schedule data represents the schedule of construction in each section of the building, and is created by the schedule data creation unit 12 based on the construction object data. Further, the schedule data can be corrected by input of data from the input unit 14 as will be described later.

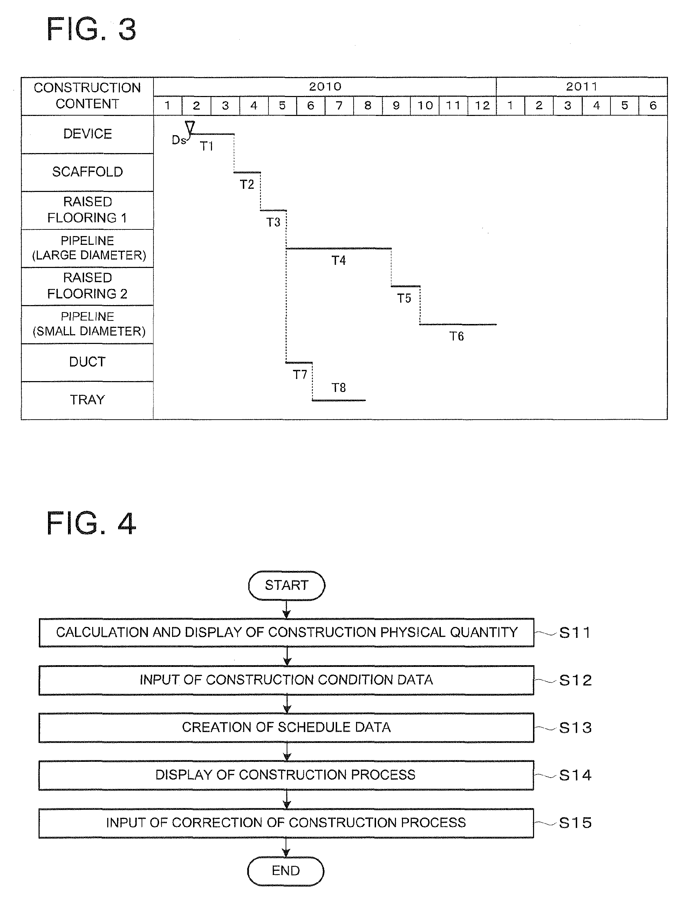

Fig. 3 is a schematic diagram illustrating an example of a construction process chart corresponding to the schedule data. As will be described later, the construction process chart is displayed based on the schedule data. The construction process here means a group of a plurality of construction works in one unity.

The schedule data represents the schedule of construction. The construction is divided into construction works (task, activity, work) of device, scaffold, raised flooring, pipeline (large diameter), pipeline (small diameter), duct, and tray. Here, construction works T1 to T8 correspond to construction works of a device, a scaffold, a raised flooring 1, a pipeline (large diameter), a raised flooring 2, a pipeline (small diameter), a duct, and a tray respectively. The construction works of the raised flooring 1 and the raised flooring 2 mean that the construction work of the raised flooring is divided because of the relation with respect to another construction work (pipeline (large diameter)). The pipeline (large diameter) and the pipeline (small diameter) are divided depending on, for example, whether or not the diameter of the pipeline is, for example, 65A or more.

The schedule data includes a construction work identifier identifying each of the construction works T1 to T8, start date, end date, construction object identifier, and display control information.

"Start date" and "end date" represent the start date and the end date of each of construction works T 1 to T8. As "construction object identifier", the range of the construction object corresponding to each of the construction works T1 to T8 is indicated. For example, when a plurality of pipelines are placed in the construction work T4, the construction object identifiers identifying the plurality of pipelines are indicated corresponding to the construction work T4.

"Display control information" is data for controlling the switching (ON/OFF) of display of each construction object. By switching the display of each construction object, time-series display (for example, moving image display) of the progress state of the construction becomes possible as will be described later.

The display control information has time information representing the construction start time and the construction end time at each of the construction works T1 to T8 and construction object, and ON/OFF information representing the presence or absence (ON/OFF) of display of the construction object at the construction start time and the construction end time.

The reason why to display the presence or absence of display at both the construction start time and the construction end time is to make it possible to display the progress state of the construction in time series (for example, moving image display) both in forward reproduction and in backward reproduction. Basically, it is possible to control display corresponding to the presence or absence of display at the construction end time in the forward reproduction and the presence or absence of display at the construction start time in the backward reproduction.

The construction start time and the construction end time of the construction object can be expressed by a relative time with respect to each construction period of the construction work. For example, when a single construction object is placed by one construction work, the ON/OFF information at the construction start time ("0.0") can be expressed by "OFF" and the ON/OFF information at the construction end time (" 1.0") can be expressed by "ON". Further, when a single construction object is removed by one construction work, the ON/OFF information at the construction start time ("0.0") can be expressed by "ON" and the ON/OFF information at the construction end time ("1.0") can be expressed by "OFF". On the other hand, when a plurality of construction objects are placed/removed by one construction work, display control information is given to each of the construction objects.

Here, the same construction object can be allocated to different construction works. An example of this case is that placement and removal of the same scaffold. In this case, it is convenient, for creation of a process, to handle the placement construction and the removal construction of the scaffold as different construction works.

In this case, display control information is designated for the same construction object identifier in each of the construction works. For example, "ON" or "OFF" is designated at each of the construction start time and the construction end time for each of the construction works 1, 2 for the same construction object identifier, and the display of the construction object is changed as follows.

At construction start time of the construction work 1: from OFF to ON

At construction end time of the construction work 1: from ON to ON

At construction start time of the construction work 2: from ON to ON

At construction end time of the construction work 2: from ON to OFF

Various elements can be added to the schedule data. For example, the movement amount of the construction object (movement amount information) can be made an element of the schedule data. As has been described, the construction object is displayed based on the position information of the construction object data. The position information generally represents the final placement position of the construction object without supposing the case where the construction objet is temporarily placed in the construction work. The use of the movement amount information of the schedule data and the position information of the construction object data enables display of the state that the construction object is temporarily placed.

For example, by adding a movement amount $(\Delta X, \Delta Y, \Delta Z)$ to a position $(X0, Y0, Z0)$ of the construction object, a position $(X1, Y1, Z1)$ where the construction object is temporarily placed can be expressed.

$$(X1, Y1, Z1) = (X0, Y0, Z0) + (\Delta X, \Delta Y, \Delta Z)$$

$$= (X0 + \Delta X, Y0 + \Delta Y, Z0 + \Delta Z)$$

(4) Construction basic data

The construction basic data is used for creating the schedule data from the construction object data. The construction basic data has some university, different from later-described construction condition data, and is applicable, for example, to similar construction. The construction basic data includes following data a. to d.

a. Construction object-construction work correspondence data

The construction object-construction work correspondence data represents the correspondence between the construction object and the construction work. This is because the construction object is allocated to the construction work based on the construction object data. Basically, which construction work the construction object corresponds to is decided according to the type of the construction object. For example, if the construction object is a device, the construction object will correspond to the construction work T1 of the device. Incidentally, the pipeline is divided into the construction work of the pipeline (larger diameter) or the pipeline (small diameter) depending on whether or not the diameter is 65A or more.

b. Construction work sequence data

The construction work sequence data represents the sequence of construction works. Though the placements of the construction objects in the sections do not always coincide with one another, the sequence data on the basis of a certain section is created in advance based on experiences and so on. From the sequence data, the base process for each of the sections can be automatically created. For the sections other than the section as the basis, the created base process is corrected as needed by input from the input unit 14. In this manner, the construction work sequence data can be created for each of the sections.

Here, the construction work progresses in the sequence of the device, the scaffold, the raised flooring 1, the pipeline (large diameter), the raised flooring 2, the pipeline (small diameter) as illustrated in Fig. 3. Further, the construction of the duct and the tray is carried on subsequent to the construction work of the raised flooring 1 and in parallel with the construction work of the pipeline (large diameter).

c. Construction work-construction physical quantity correspondence data

The construction work-construction physical quantity correspondence data represents the correspondence between the construction work and the type of the construction physical quantity. This is for deciding the physical quantity for each construction work. For example, the correspondence between the construction work and the type (for example, size, weight) of a construction physical quantity Mi is defined as follows.

- Construction of pipeline, tray, raised flooring: the weight [t] of pipeline and the like
- Construction of scaffold: the volume [m$^3$] of scaffold (the product of the area and height of raised flooring)
- Construction of duct: the surface area [m$^2$] of duct

d. Man-hour coefficient Ai for each construction work i

The man-hour coefficient Ai for each construction work i indicates the proportion of the man-hour to the construction physical quantity in the construction work. As has been described, the construction physical quantity Mi is expressed, for example, by the total of the size and the weight of the construction object in the construction work. Basically, a man-hour Hi in the construction work is decided by multiplying the construction physical quantity Mi and the man-hour coefficient Ai (Hi = Mi*Ai).

- Pipeline, tray, raised flooring: men/weight [man/t]
- Scaffold: men/volume [man/m$^3$]
- Duct: men/surface area [man/m$^2$]

(5) Construction condition data

The construction condition data is used for creating the schedule data from the construction object data, and is basically inputted from the input unit 14 according to a case of construction as will be described later. The construction condition data includes the following data a. to c.

a. Construction start date Ds for each section

The construction start date Ds for each section is used for calculation of a construction end date De for each section and the like.
b. Input personnel Pi [man/day] for each section and construction work The number of input personnel Pi for each construction work is used for calculating a construction required time Ti in the construction work from the man-hour Hi (Ti = Hi/Pi).

c. Construction object sequence data

The construction object sequence data represents the sequence of construction of the construction objects in the construction work and is used for creation of the display control information. For example, the sequence of piping in the construction work of the pipeline (large diameter) is indicated.
The schedule data creation unit 12 creates the schedule data based on the construction object data and the construction basic data. As has been described, Fig. 2 is a schematic chart illustrating an example of the created schedule data.
The schedule data creation unit 12 functions as the following elements.

- An allocation unit to allocate the plurality of construction objects to any one of a plurality of construction works based on the type information
- A calculation unit to calculate a construction period of each of the plurality of construction works based on the size or the weight of the construction object allocated to each of the plurality of construction works
- A creation unit to create a construction process chart based on the calculated construction periods and on the construction work sequence data representing the sequence of the plurality of construction works
- A second creation unit to create the display control information representing the presence or absence of display at each of the start time and the end time of the construction of each of the plurality of construction works and the plurality of construction objects based on the calculated construction period and the inputted order.

The display control unit 13 controls static and dynamic displays of the construction object on the display unit 15. The display control unit 13 enables visualization of the construction process. The display control unit 13 functions as "an extraction unit to extract a construction object whose display is changed in a predetermined period from the plurality of construction objects based on the display control information". The display control unit 13 is divided into a construction object display control unit, a schedule display control unit, and a cooperation display control unit.

(1) Construction object display control unit

The construction object display control unit visualizes the construction object based on the construction object data stored in the data storage unit 11. The construction object display control unit has a display state table representing the correspondence between the construction object identifier, ON/OFF of display of the construction object, and the display attribute, and creates display data corresponding to the display state table. For example, the content of the frame memory is rewritten based on the display state table, and display data is created based on the frame memory and outputted to the display unit 15. The display attribute is information designating the color, the type of line (solid line, broken line, one-dotted line), the thickness of the line and the like when the construction object is displayed.

By arbitrarily setting ON/OFF and the display attribute of the display for each construction object identifier, various display becomes possible. For example, it is possible to display only the construction object of a specific type, not to display the construction object, or to display the construction object in different color, type of line, thickness of line. In this event, the type and the display attribute of the construction object can be designated through the input unit 14.

Note that any display form of 3D and 2D can be selected as the display state.

(2) Schedule display control unit

The schedule display control unit can display the construction process chart (for example, the construction time schedule displayed in a calendar form) based on the schedule data stored in the data storage unit 11. As has been described, Fig. 3 illustrates an example of the construction process chart displayed on the display unit 15. The construction time schedule is indicated by the construction works T1 to T8.

Various inputs from the input unit 14 become possible here using the construction process chart displayed on the display unit 15. For example, designation of the date and hour and the time series display are possible. The designation of the date and hour enables display of the construction status at that date and hour. Further, the designation of the dynamic display of the construction object enables the time-series display of the construction status (forward reproduction, backward reproduction, stop, frame-by-frame reproduction).

"Forward reproduction" means dynamic display of the change of the construction status following the sequence of progress of the construction. "Backward reproduction" means dynamic display of the change of the construction status following the reverse sequence of progress of the construction. "Frame-by-frame reproduction" means temporary stop of the forward reproduction or the backward reproduction and shift to the next display in sequence by input from the input unit 14.

When the date and hour and the time-series display are designated, the schedule display control unit outputs the information on date and hour to the cooperation display control unit. When the date and hour is designated, the schedule display control unit outputs the designated date and hour.

Further, when the time-series display is designated, the schedule display control unit continuously outputs the information on the date and hour according to the time-series display (forward reproduction, backward reproduction, stop, frame-by-frame reproduction).

The schedule display control unit can output the date and hour for displaying the construction status. For example, date and hour D to be outputted can be decided based on the following expression (1). By selecting one hour, one day, one week is selected as an update unit time $\Delta t$, the change of construction state in every hour, every day, every week can be displayed.

$$D = Ds + \Delta t * n \qquad \text{... Expression (1)}$$

Ds: construction start date and hour
$\Delta t$: update unit time
n: number of update times

In contrast, the schedule display control unit can also extract and output only the date and hour corresponding to movement of construction (change of placement state of the construction object). Concretely, the date and hour is outputted based on the start time and the end time of the construction work in construction minimum unit. As has been described, the schedule data includes the display control information corresponding to each construction object identifier. Therefore, when construction works 1 to i in construction minimum unit are serially performed, the date and hour D (i, j) to be outputted can be decided, for example, based on the following expression (2).

$$D = (i, j) = Ds + \Sigma_{k=1}^{i-1}[T(k)] + T(i)*\Sigma\Delta tr(i, j) \qquad \text{...Expression (2)}$$

Ds: start date and hour of construction work

T(i): required time in construction work i

Atr(i,j): relative construction period of construction object to be constructed at j-th in construction work i (relative proportion of "end time ofj-th construction - start time of j-th construction" with respect to the whole period of construction work i)

Further, when a plurality of construction works are performed in parallel (for example, a construction work T4 and construction works T7, T8 in Fig. 3), the date and hour D(i, j) is calculated for each of the parallel construction works, and the date and hour D (i, j) to be outputted is decided based on the magnitude relation. For example, in the forward reproduction, the date and hour D(i,j) is outputted in an ascending order from among the date and hours D(i, j) corresponding to the respective parallel construction works.

The presence or absence of display of the construction object (placement state of the construction object) changes at the start time or the end time of the construction work in a construction minimum unit. Therefore, the date and hour D(i,j) is made to correspond to the start time or the end time of the construction work in a construction mmimum unit to make it possible that the change of the placement state of the construction object corresponds to the update of the screen.

In the forward reproduction here, the presence or absence of display of the construction object is changed based on the ON/OFF information at the end time of the construction. In the backward reproduction, the presence or absence of display of the construction object is changed based on the ON/OFF information at the start time of the construction.

(3) Cooperation display control unit

The cooperation display control unit rewrites the display state table in the construction object display control unit based on the date and hour D(i, j) outputted from the schedule display control unit. Concretely, the cooperation display control unit decides the relation between the construction object (identifier) and the ON/OFF of display based on the date and hour D(i, j) and the schedule data outputted from the schedule display control unit, and rewrites the display state table in the construction object display control unit based on the decision. As a result, the visualized state of the construction object is dynamically changed.

(4) Extraction of change in period

In the foregoing, it is basically considered that a specific date and hour is selected, and the construction status (the placement state of the construction object) at that time is displayed. This also applies to the case of the time-series display. More specifically, the display content changes with time, but the placement state of the construction objet at a specific date and hour is displayed at a certain moment. In contrast, if the change of placement state of the construction object in a certain period can be displayed, it becomes easy to collectively grasp the construction contents in this period.

For example, the change of placement state of the construction object in a specific period (period between first and second date and hours) as follows. Using the display control information of the schedule data, the change of placement state of the construction object in the specific period is extracted. In other words, the construction object whose ON/OFF of display has been changed can be extracted from the display control information (ON/OFF information) corresponding to this period. Then, the extracted construction object is displayed to be distinguishable from other construction objects. For example, the extracted construction object is displayed in color, type of line, or thickness of line different from other construction objects.

The change in ON/OFF of display of the construction object in this period can include the following classifications (1) to (4) or the like.

(1) from OFF to ON
(2) from ON to OFF
(3) from OFF to ON, then from ON to OFF
(4) from ON to OFF, then from OFF to ON

Hence, it is conceivable to make the display state of the construction object different according to the classification (1) to (4) or the like. For example, display is performed with any of color, type of line, and thickness of line made different.

The input unit 14 is an input device inputting data, for example, a keyboard or mouse. The input unit 14 functions as "an input unit to input the order of construction of a plurality of construction objects"

The display unit 15 is a display device displaying an image, for example, a liquid crystal display device. The display unit 15 functions as "a display unit to display the plurality of construction objects based on the display control information and the position information" and "a second display unit distinguishably to display an extracted construction object and other construction objects".

(Operation procedure of the construction process creation system 10)

Hereinafter, the operation procedure of the construction process creation system 10 will be described. Fig. 4 is a flowchart illustrating an example of the operation procedure of the construction process creation system 10.

A. Calculation of construction physical quantity Mi for each section and construction work (Step S11)

The construction physical quantity Mi for each section and construction work i is calculated. By comparing the construction object data to the construction object-construction work correspondence data and the building data, the corresponding construction object is extracted for each section and construction work i. Then, by adding the physical quantity of the extracted construction object, the construction physical quantity Mi is calculated. As has been described, the construction work-construction physical quantity correspondence data is used for deciding the type of the construction physical quantity.

The construction physical quantity Mi is displayed as needed and referred to when inputting the construction basic data.

Here, a pipeline density $\rho$ may be calculated. The pipeline density $\rho$ means the proportion of the pipeline in unit volume and can be calculated by the following expression (3).

$$\rho = V(i, j, k)/V0 \quad \dots \text{ Expression (3)}$$

V(i, j, k): volume of pipeline in a space (i, j, k) sectioned by a unit space
V0: unit volume (volume in unit space)

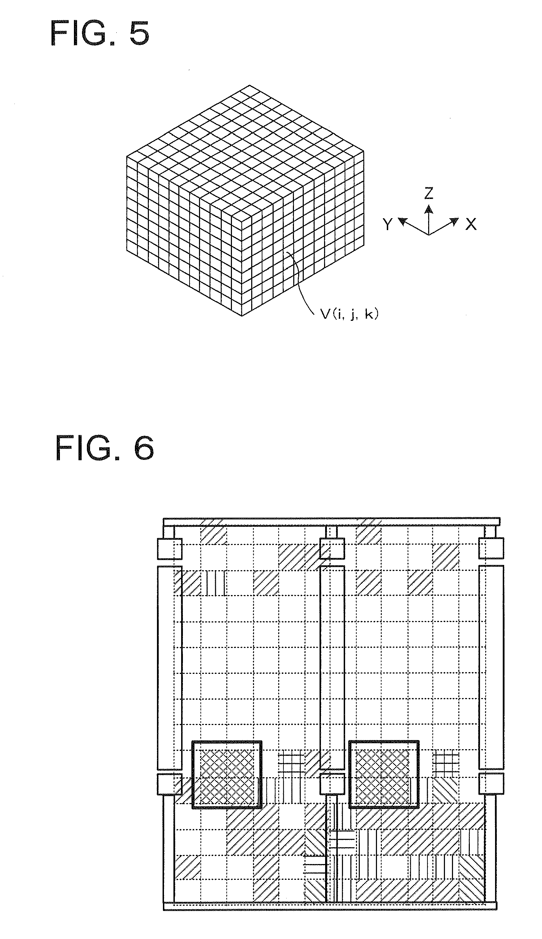

Fig. 5 illustrates an example of the space (i, j, k) sectioned by unit volume. The space is sectioned into N1 to N3 pieces in unit space (for example, a space with length, width, height of 2 m each) in X-, Y-, Z-directions respectively. The space (i, j, k) is a unit space at i-th, j-th, k-th in the X-, Y-, Z-directions respectively.

The calculated pipeline density $\rho$ is displayed as needed on the display unit 15. Fig. 6 illustrates an example of display of the pipeline density $\rho$. For example, by designating a section and the height in the section, the pipeline density $\rho$ at the height is displayed. Here, the pipeline density $\rho$ is displayed in a different color (with different hatchings in Fig. 6) for each unit space sectioning the building. The pipeline density $\rho$ is referred to when inputting the construction basic data together with the construction physical quantity Mi.

B. Input of construction condition data (Step S 12)

The construction condition data is inputted. As has been described, the construction condition data includes the following data a to c (the construction start date Ds, the input personnel Pi, the construction object sequence data). Here, the construction start date Ds and the input personnel Pi are inputted from the input unit 14 by an operator referring to the construction physical quantity Mi and the pipeline density $\rho$ for each section and construction work. Note that the construction start date Ds is set for each section and does not need to be set for each construction work. By using the construction work sequence data and the like which have been already described, the construction start date for each construction work can be calculated.

a. Construction start date Ds for each section
b. Input personnel Pi for each section and construction work [man/day]
c. Construction object sequence data

Here the area where the calculated pipeline density $\rho$ exceeds a predetermined set value can be considered as a location where the construction physical quantity is concentrated. In such a case, it can be considered that the construction objects at this location are assembled (connected) in advance at another place as one unit (module). In this case, a modularization percentage Ui expressed by the expression (4) can be used for calculation of the construction period.

$$Ui = Uw/Tw \qquad \dots \text{Expression (4)}$$

Uw: the number of connection locations contained in one unit (module) in a section (area where the pipeline density $\rho$ exceeds the predetermined set value in the section)

Tw: the total number of connection locations in a section

C. Creation of schedule data (Step S 13)

The schedule data is created as follows.

(1) Calculation of the construction required time Ti for each section and construction work i

The construction required time Ti for each section and construction work i is calculated based on the following expression (5).

$$Ti = Mi^*Ai^*\alpha i/Pi^*Ur \qquad \dots \text{Expression (5)}$$

Ai: man-hour coefficient ([man/weight], [man/volume], [man/surface area])
$\alpha i$: difficulty coefficient for each section
Pi: input personnel for each section and construction work [man/day]
Ur: 1 - Ui

The difficulty coefficient $\alpha i$ can be calculated as in the following expression (6), for example, by a deviation value Di of the number of curves mi of the pipeline in each section.

$$\alpha i = (Di - 50)^*100 + 1 \dots \text{Expression (6)}$$

Di: deviation value of the number of curves mi of pipeline

The deviation value Di can be calculated as the following expression (7) by the number of curves mi of the pipeline in each section.

$$Di = 10((mi - \mu m)/\sigma m) + 50 \qquad \dots \text{Expression (7)}$$

$\mu m = (1/N)\Sigma mi$
$\sigma m = ((1/N) \Sigma(mi - \mu m)^2)^{1/2}$
$\mu m$: average value of the number of curves mi of pipeline
$\sigma m$: standard deviation value of the number of curves of mi of pipeline
N: the number of sections

Here, the difficulty coefficient $\alpha i$ is decided based on 100 times (Di - 50) as expressed by the expression (6). Incidentally, for the multiple, a value other than "100" can be employed as necessary.

(2) Calculation of start date Ds(i) and end date De(i) for each section and construction work i

The start date Ds(i) and the end date De(i) for each section and construction work i are calculated as in the following expression (8).

$$Ds(i) = Ds + \Sigma T(j) \quad \dots \text{Expression (8)}$$

$$De(i) = Ds(i) + T(i)$$

(3) Decision of display control information

A relative time $\Delta tj$ for a j-th construction element in the construction work Ti (one element of the display control information) can be calculated as in the following expression (9).

$$\Delta tj = Mij/Mi \quad \dots \text{Expression (9)}$$

Mij: physical quantity ofj-th construction object in construction work Ti

The ON/OFF information at the start time and the end time of the relative time $\Delta tj$ is generally decided as follows. This is because as the result of the construction work, the construction object typically shifts from non-existence to existence.
At start time of relative time $\Delta tj$: OFF
At end time of relative time $\Delta tj$: ON

However, when the construction object shifts from existence to non-existence as removal of the scaffold, the ON/OFF information at the start time and the end time of the relative time $\Delta tj$ is decided as follows.
At start time of relative time $\Delta tj$: ON
At end time of relative time $\Delta tj$: OFF

By the calculation and decision in the foregoing (1) to (3), the schedule data is created and held in the data storage unit 11.

D. Display of construction process (Step S 13)

Based on the schedule data created as described above, the construction process can be displayed. This display can be performed to correspond to the construction object display control unit, the schedule display control unit, and the cooperation display control unit of the display control unit 13. For example, the construction object and the schedule are displayed in windows 1, 2 on the display unit 15 so that they can be cooperated.

(1) Display of construction object

The construction object display control unit can perform 2D and 3D displays of the building and the construction object in the window 1 based on the construction object data stored in the data storage unit 11. As has been described, for example, it is possible to display only a construction object of a specific type, not to display the construction object, or to display the construction object in different color, type of line (solid line, broken line, one-dotted chain line), thickness of line as has been described.

(2) Display of construction time schedule

The schedule display control unit can display the construction time schedule in the window 2, for example, in a calendar form based on the schedule data stored in the data storage unit 11.

As has been described, the time-series display of the construction can be designated using the window 2. For example, forward reproduction, backward reproduction, stop, or frame-by-frame reproduction of the construction status can be designated.

(3) Cooperation display

The cooperation display control unit changes the display of the construction objet in the window 1 with time by designation of the time-series display of the construction in the window 2. As has been described, responding to the designation of the time-series display, the date and hour displayed by the schedule display control unit is decided in sequence, and the cooperation display control unit rewrites the display state table in the construction object display control unit. In short, the time-series display of the construction state becomes possible.

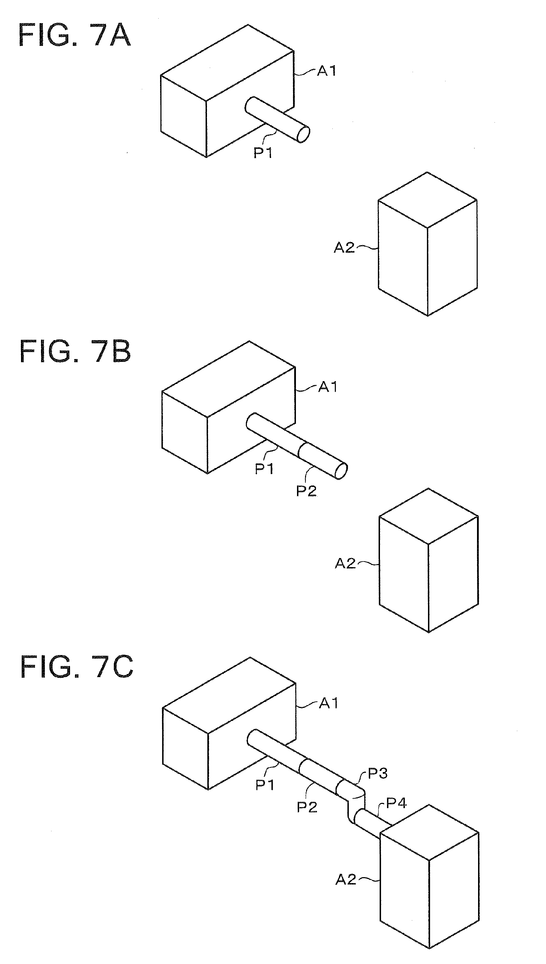

Fig. 7A to Fig. 7C are schematic views illustrating an example of the time-series display of the construction state. Transition of the construction of pipelines P1 to P4 connecting facilities 1 and 2 is illustrated. It is found that the pipelines P3 and P4 are added along with transition of the construction.

E. Input of correction of construction time schedule (Step S 15)

Referring to the display of the construction process, the construction condition, for example, the construction start date and hour and the construction end date and hour for each type can be changed. In other words, the changed construction start date and hour and construction end date and hour are inputted and the schedule data is rewritten. The construction process can be displayed based on the rewritten schedule data.

(Advantages of the construction process creation system 10)

The construction process creation system 10 can enjoy the following advantages.

A. Automatic creation of section-classified process chart (schedule data)

The section-classified process chart for each section is useful for progress of construction. The section-classified process chart can be manually created, for example, as follows. Specifically, the section-classified process chart is created by deciding the construction period and so on from the construction physical quantity and so on in construction section unit in consideration of know-how of experience and actual result of the preceding construction. The construction physical quantity can be calculated by manual calculation of a designer from drawings and so on. The manual creation of the section-classified process chart in this manner requires a lot of time and effort.

In this embodiment, the construction physical quantity is automatically calculated in construction section unit from the building data (construction section data) and the construction object data. Then, the construction condition data is inputted to calculate the construction period for each construction work, whereby the section-classified process chart (schedule data) can be automatically created.

Here, the numerical quantity unit of the construction physical quantity can be set according to the type of the construction object For example, the weight (t), length (m), area ($m^2$), volume ($m^3$) can be set as the numerical quantity unit of the construction physical quantity.

Further, the construction period can be calculated by adding the difficulty of construction for each section.

B. Dynamic display of construction process

In this embodiment, the time-series display (dynamic display) of the construction object is possible, thus facilitating grasp of transition of the construction.

(1) Extraction of movement of construction (change of placement state of construction object)

In this embodiment, the display screen can be updated to correspond to the change in display of the construction object for time-series display of the construction object.

For the above, the display can be updated with the update unit time Δt designated with respect to the period of the construction. In other words, the update unit time Δt is fixed.

In this case, it is difficult to grasp the movement of the construction because the update unit time Δt does not correspond to the change of the display state. For example, when a small update unit time Δt is designated in a scene where there are lots of works with long construction periods, the user may be kept waiting for a long time in a state with no change of the screen. On the other hand, when a large update unit time Δt is designated in a scene where there are lots of works with short construction periods, individual work results are not reflected in the screen and may be overlooked. To prevent such situations, it is necessary to confirm the construction periods before and after the displayed time point and change the update unit time Δt.

In this embodiment, updating the display screen to correspond to the change in display of the construction object makes it possible to prevent the user from being kept waiting for a long time and the result of a small work from being overlooked (efficient simulation of construction).

(2) Display control of the same construction object

In this embodiment, it is possible to designate the same construction object identifier to switch the display state when repeating the placement and removal of the same construction object (for example, scaffold for construction).

If data on a plurality of construction objects are used correspondingly to repetition of the placement and removal of the same construction object, the data amount increases and may deteriorate the operability.

(Other embodiments)

The embodiment of the present is not limited to the above embodiment and is also effective to a case where the construction object data is changed. This is because the calculation unit for the construction period and the creation unit for the schedule data based on the construction basic data and the construction condition data for creating the construction work are independent from the construction object data. It becomes possible to previously create and review the construction process before completion of the construction object data and finally create and review the construction process also after completion of the construction object data.

Further, since the creation of a precise construction process based on data is possible, it is effective to use an embodiment for creation of the construction process with a wide range of construction works to be handled and with a large number of construction objects. Therefore, the embodiment is applicable not only to creation of the construction process at construction but also to creation of the construction process at reconstruction.

Further, the data of the result of the created construction process can be used together with the display system for simulation. For example, the data can be used for checking the work procedure at a site without needing calculation of the construction period and creation of the schedule data using the construction basic data and the construction condition data. This utilization method is also applicable to control of education to the worker, quality, and time.

Each of the above-described embodiments is useful for creation of the construction process of a nuclear or thermal power plant and a chemical plant. However, the present invention is not limited to these fields but is useful for creation of the construction process relating to various types of construction and reconstruction.

Explanation of Numerals

10: construction process creation system
11: data storage unit
12: schedule data creation unit
13: display control unit
14: input unit
15: display unit

**Claims**

1. A construction process creation system, comprising:

    a storage unit to store construction object data having construction object identifiers identifying a plurality of construction objects from one another, type information, position information, size information, and weight information;
    an allocation unit to allocate the plurality of construction objects to any one of a plurality of construction works based on the type information; and
    a calculation unit to calculate a construction period of each of the plurality of construction works based on a size or a weight of the construction object allocated to each of the plurality of construction works.

2. The construction process creation system according to claim 1, further comprising
   a creation unit to create a construction process chart based on the calculated construction period and on construction work sequence data representing a sequence of the plurality of construction works.

3. The construction process creation system according to claim 1,
   wherein the storage unit further stores construction section data representing ranges of a plurality of construction sections; and

wherein the calculation unit calculates the construction period of each of the plurality of construction works for each of the plurality of construction sections based on a construction physical quantity of the construction object in each of the plurality of construction sections and on a man-hour coefficient indicating a proportion of a man-hour to the construction physical quantity in the plurality of construction sections and the plurality of construction works.

4. The construction process creation system according to claim 3,
wherein the calculation unit calculates the construction period of each of the plurality of construction works for each of the plurality of construction sections based on a number of curves of the construction object in each of the plurality of construction sections and on the size or the weight.

5. The construction process creation system according to claim 4,
wherein the calculation unit calculates the construction period of each of the plurality of construction works for each of the plurality of construction sections based on a deviation value of the number of curves of the construction object in each of the plurality of construction sections.

6. The construction process creation system according to claim 1,
wherein the calculation unit calculates the construction period of each of the plurality of construction works based on a modularization percentage calculated based on a density of the plurality of construction objects per unit volume in addition to the size or the weight of the construction object allocated to each of the plurality of construction works.

7. The construction process creation system according to claim 1, further comprising:

an input unit to input an order of construction of the plurality of construction objects;
a second creation unit to create display control information representing presence or absence of display at each of start time and end time of construction of each of the plurality of construction works and the plurality of construction objects based on the calculated construction period and on the inputted order; and
a display unit to display the plurality of construction objects based on the display control information and on the position information.

8. The construction process creation system according to claim 7,
wherein the display control information represents presence or absence of display at each of start time and end time of construction for different construction works and the same construction object.

9. The construction process creation system according to claim 7,
wherein the display on the display unit is updated corresponding to the start time or the end time of construction of each of the construction objects.

10. The construction process creation system according to claim 7, further comprising a second storage unit to store movement amount information representing a movement amount of the construction object,
wherein the display unit displays the plurality of construction objects based on the display control information, the position information and the movement amount information.

11. The construction process creation system according to claim 7, further comprising:

an extraction unit to extract a construction object whose display is changed in a predetermined period from the plurality of construction objects based on the display control information; and
a second display unit distinguishably to display the extracted construction object and other construction objects.

12. A construction process creation method, comprising:

allocating a construction object to any one of a plurality of construction works based on type information in construction object data having a construction object identifier identifying the construction object, the type information, position information, size information, and weight information; and
calculating a construction period of each of the plurality of construction works based on a size or a weight of the construction object allocated to each of the plurality of construction works.

13. A construction process creation system, comprising:

a first storage unit to store construction object data including position information on a plurality of construction objects;

a second storage unit to store display control information representing presence or absence of display at each of start time and end time of construction of each of the plurality of construction objects; and

a display unit to display the plurality of construction objects based on the display control information and on the position information.

# FIG. 1

# FIG. 2

| TYPE | ELEMENT | | | |
|---|---|---|---|---|
| DEVICE | POSITION | SHAPE | LENGTH, WIDTH, HEIGHT | WEIGHT |
| PIPELINE | POSITION | SHAPE | DIAMETER, LENGTH | WEIGHT |
| DUCT | POSITION | SHAPE | DIAMETER, LENGTH | WEIGHT |
| CABLE TRAY | POSITION | SHAPE | SIZE, LENGTH | WEIGHT |
| RAISED FLOORING | POSITION | SHAPE | LENGTH, WIDTH, HEIGHT | WEIGHT |
| SCAFFOLD | POSITION | SHAPE | LENGTH, WIDTH, HEIGHT | WEIGHT |

# FIG. 3

| CONSTRUCTION CONTENT | 2010 | | | | | | | | | | | | 2011 | | | | | |
|---|---|---|---|---|---|---|---|---|---|---|---|---|---|---|---|---|---|---|
| | 1 | 2 | 3 | 4 | 5 | 6 | 7 | 8 | 9 | 10 | 11 | 12 | 1 | 2 | 3 | 4 | 5 | 6 |
| DEVICE | | Ds ▽ T1 | | | | | | | | | | | | | | | | |
| SCAFFOLD | | | | T2 | | | | | | | | | | | | | | |
| RAISED FLOORING 1 | | | | | T3 | | | | | | | | | | | | | |
| PIPELINE (LARGE DIAMETER) | | | | | | | T4 | | | | | | | | | | | |
| RAISED FLOORING 2 | | | | | | | | | T5 | | | | | | | | | |
| PIPELINE (SMALL DIAMETER) | | | | | | | | | | T6 | | | | | | | | |
| DUCT | | | | | | T7 | | | | | | | | | | | | |
| TRAY | | | | | | | T8 | | | | | | | | | | | |

# FIG. 4

```
        ( START )
            │
            ▼
┌─────────────────────────────────────────────────────────┐
│ CALCULATION AND DISPLAY OF CONSTRUCTION PHYSICAL QUANTITY │──── S11
└─────────────────────────────────────────────────────────┘
            │
            ▼
┌─────────────────────────────────────────────────────────┐
│          INPUT OF CONSTRUCTION CONDITION DATA            │──── S12
└─────────────────────────────────────────────────────────┘
            │
            ▼
┌─────────────────────────────────────────────────────────┐
│              CREATION OF SCHEDULE DATA                   │──── S13
└─────────────────────────────────────────────────────────┘
            │
            ▼
┌─────────────────────────────────────────────────────────┐
│           DISPLAY OF CONSTRUCTION PROCESS                │──── S14
└─────────────────────────────────────────────────────────┘
            │
            ▼
┌─────────────────────────────────────────────────────────┐
│      INPUT OF CORRECTION OF CONSTRUCTION PROCESS         │──── S15
└─────────────────────────────────────────────────────────┘
            │
            ▼
         ( END )
```

# FIG. 5

V(i, j, k)

# FIG. 6

FIG. 7A

FIG. 7B

FIG. 7C

## INTERNATIONAL SEARCH REPORT

| International application No. |
|---|
| PCT/JP2009/006054 |

**A. CLASSIFICATION OF SUBJECT MATTER**
*G06Q50/00*(2006.01)i, *E04G1/00*(2006.01)i

According to International Patent Classification (IPC) or to both national classification and IPC

**B. FIELDS SEARCHED**

Minimum documentation searched (classification system followed by classification symbols)
G06Q50/00, E04G1/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2002-123786 A (Hitachi, Ltd.), 26 April 2002 (26.04.2002), entire text; all drawings (Family: none) | 1-13 |
| Y | JP 2009-169778 A (Hitachi-GE Nuclear Energy, Ltd.), 30 July 2009 (30.07.2009), paragraph [0053] & US 2009/0187384 A | 1-13 |
| Y | JP 2004-272347 A (Hitachi Plant Engineering & Construction Co., Ltd.), 30 September 2004 (30.09.2004), entire text; all drawings (Family: none) | 7-11,13 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 19 January, 2010 (19.01.10) | 16 February, 2010 (16.02.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2009/006054

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2005-50098 A  (Takenaka Corp.),<br>24 February 2005 (24.02.2005),<br>entire text; all drawings<br>(Family: none) | 7-11,13 |

Form PCT/ISA/210 (continuation of second sheet) (April 2007)

**EP 2 500 858 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002266498 A